# EUROPÄISCHE PATENTANMELDUNG

(11) **EP 4 299 772 A1**
(43) Veröffentlichungstag der Anmeldung: **03.01.2024**
(21) Anmeldenummer: 23181376.7
(22) Anmeldetag: 26.06.2023
(51) Int. Cl.: C21D 9/46, C22C 38/02, C22C 38/04, C22C 38/06, H02K 1/02, H02K 15/02, C21D 8/12, C21D 6/00

(54) **HOCHEFFIZIENTE KOMPRESSOR-MOTOREN**

(30) Priorität: 29.06.2022 DE 102022116250
(71) Anmelder: ThyssenKrupp Steel Europe AG, 47166 Duisburg (DE)
(72) Erfinder: Walter, Andreas, 44807 Bochum (DE); Machalitza, Karsten, 45473 Mülheim (DE); Telger, Dr. Karl, 48653 Coesfeld (DE)
(74) Vertreter: ThyssenKrupp Steel Europe AG

(57) **Zusammenfassung**

Die vorliegende Erfindung betrifft einen elektrischen Kompressormotor für Klimaanlagen oder Wärme- oder Fluidpumpen mit Stator und Rotor.

## Beschreibung

Die Erfindung betrifft einen elektrischen Kompressormotor für Klimaanlagen oder Wärme- oder Fluidpumpen mit Stator und Rotor, wobei Stator und/oder Rotor ein Blechpaket aus gegeneinander elektrisch isolierten Lamellen aus Elektroband oder-blech mit genau definierten Eigenschaften in Bezug auf Legierung und Dichte, sowie Mechanik und Magnetik aufweist.

Das vom Ministerrat der Europäischen Kommission am 22. Mai 2019 verabschiedete EU-Legislativpaket "Clean Energy for All Europeans" gibt die Energie- und Klimaziele der Europäischen Union (EU) für 2030 vor. Um die hohe Priorität von Energieeffizienz verbindlich zu gestalten, hat die Kommission das Ziel von 30 Prozent Energieeinsparung bis 2030 vorgegeben (Basis 2005).

Im Zuge der Bestrebung den weltweiten CO2-Ausstoß und damit verbunden, den Energieverbrauch zu reduzieren, wurden in den letzten Jahren legislatorische Vorgaben für elektrische Maschinen zur Erreichung höherer Wirkungsgrade und somit geringerer Energieverbräuche beschlossen. Ein sehr großer Anteil am weltweiten Energiebedarf wird durch elektrische Maschinen verursacht, insbesondere in kontinuierlich laufenden Anwendungen, wie z. B. bei Klimaanlagen in Gebäuden, die mit leistungsstarken Kompressormotoren ausgestattet sind. Im Jahr 2016 betrug der weltweite Energiebedarf für Raumkühlung insgesamt 1.997 TWh (ca. 12,5 % des weltweiten Energieverbrauchs). Laut der Prognose wird dieser in 2050 auf 6.205 TWh steigen (Ahmad & Philippe III, 2019). In Australien zum Beispiel haben Kühlungssysteme einen Anteil von bis zu 40 % an dem gesamten Energieverbrauch. Unter Berücksichtigung des Klimawandels und der Erderwärmung ist von höheren Zahlen auszugehen.

Heutzutage konzentriert sich die Klimaanlagenindustrie im Bereich der Effizienz auf Optimierung der Regelbarkeit durch intelligente Sensoren (Thermostate etc.). Dadurch können die Betriebszeiten und -intensitäten zur Erreichung einer angestrebten Klimatisierung reduziert werden. Der Motor des Kompressors, der die Energieverluste in einer Klimaanlage verursacht, bleibt dabei aber unverändert bzw. spielt eine untergeordnete Rolle. Typische Wirkungsgrade von PMSM-Kompressormotoren (PMSM - Permanent Magnet Synchron Motor) liegen im Nennbetriebspunkt bei ca. 93 % oder teilweise darunter. Bei ASM-Kompressormotoren (ASM - Asynchronmotor) werden Wirkungsgrade deutlich unterhalb von 93 % erreicht, z.B. bei ca. 86%.

In der JPH 1025554 A sind Elektrobleche für Motoren mit verbessertem Wirkungsgrad für Klimaanlagen beschrieben. Verstärktes Augenmerk wurde dabei auf die Blechdicke, die Oberflächenrauheit, den spezifischen Widerstand und den Korndurchmesser eines nicht-kornorientierten Stahlbleches gelegt.

Im Gegensatz zu Kühl- oder Gefrierschränken umfasst das Lastprofil eines Kompressormotors in Klimaanlagen ein deutliches breiteres Drehzahlspektrum. Die Kompressormotoren in Klimaanlagen befinden sich öfter und länger im Teillastbetrieb, in welchem der Wirkungsgrad tendenziell geringer ist als im Nennbetrieb (Nennbetrieb = meist hoher Wirkungsgrad, welcher in der Regel auch auf dem Typenschild des Motors zu finden ist).

Moderne Kompressormotoren in Klimaanlagen können zur Anpassung der Motordrehzahl mit einem Frequenzumrichter betrieben werden. Dabei lässt sich zum einen Energie einsparen und zum anderen aber auch eine anforderungsgerechte Drehzahl bzw. auch Drehmoment einstellen. Durch den Frequenzumrichter werden zur Grundfrequenz auch Oberschwingungen (>400Hz bis 30 kHz und darüber hinaus) erzeugt, die zu höheren Frequenzanteilen und somit auch zur Erhöhung der Eisenverluste führen können.

Beispielsweise bei einer unmittelbaren Nähe der Klimaanlagen zu dem Verbraucher werden erhöhte Anforderungen an die NVH (Noise, Vibration, Harshness; "Geräusch, Vibration, Rauhigkeit") - Merkmale gestellt. Dabei bezeichnet Geräusch (Noise) alle Geräuschphänomene, die vom Antrieb verursacht werden, unter Vibration versteht man jede Art von mechanischer Schwingung und Rauigkeit bezeichnet die subjektive Beurteilung von Geräusch- und Schwingungsphänomenen, bevorzugt den hör- und fühlbaren Bereich von 20 Hz bis 100 Hz. In der Regel werden diese Phänomene einzeln und isoliert voneinander untersucht, wobei prinzipiell die Messkette aus einem Sensor (Beschleunigungssensor, Mikrofon, Intensitätssonde, Laservibrometer), einem Datenerfassungssystem und einem Datenanalysesystem besteht.

Beispielsweise fällt bei elektrisch betriebenen Fahrzeugen durch den Umstieg auf Elektrofahrzeuge das Geräusch des Verbrennungsmotors weg, welches bisher die Geräusche des Kompressors einer Klimaanlage im Fahrzeug überdeckt hat.

Insbesondere sollen die Klimaanlagen aufgrund ihrer Verortung beim Endverbraucher über lange Zeiträume wartungsfrei laufen. Durch ansteigende Beliebtheit und somit Erhöhung der Anzahl können durch Verbesserung an diesen Klimaanlagen in der Summe ein signifikanter Beitrag am Umwelt-und Klimaschutz geleistet werden.

Aus den Druckschriften CN 111 304 518 A und CN 102 676 916 A sind gattungsgemäße Elektrobleche für Kompressormotoren bekannt. Die für die Kompressormotoren konzipierten Elektrobleche benötigen u.a. Zinn als Pflichtelement in der Stahllegierung, welche sich an den Korngrenzen abscheiden, um die Festigkeit und die magnetischen Eigenschaften zu verbessern.

Der Trend geht aber auch in Richtung Modernisierung von bestehenden Heizungsanlagen oder bei Neubau mit Neuinstallationen von Wärmepumpen, u.a. von Luft-Wasser-Heizungswärmepumpen, die einen gesteigerten Beitrag zur Reduktion und Substitution von erdgasbefeuerten Heizungsanlagen beisteuern.

Auch in weiteren z. B. mobilen Anwendungen werden Motoren für ähnliche Anwendungen mit hohen Anforderungen an die Effizienz und Baugröße gestellt.

Der Erfindung liegt somit die Aufgabe zu Grunde, effizientere elektrische Kompressormotoren für Klimaanlagen oder Wärme- oder Fluidpumpen zur Verfügung zu stellen, die neben einem erhöhten Wirkungsgrad bzw. geringeren Verlusten auch gestiegene NVH Anforderungen erfüllen. Die Erfindung soll auch zum Umwelt- und Klimaschutz beitragen und gleichzeitig die Verbraucherkosten nicht erhöhen oder sogar reduzieren. Besonders vorteilhaft ist auch ein modulierender Betrieb. Dies soll insbesondere auf Klimaanlagen mit bis zu 2000 Watt Kühlleistung oder sogar mehr abgestimmt werden. Auch im Falle von Wärme- oder Fluidpumpen können entsprechende elektrische Kompressormotoren mit höherem Wirkungsgrad bereitgestellt werden.

Gelöst wird diese Aufgabe durch einen elektrischen Kompressormotor für Klimaanlagen mit den Merkmalen des Patentanspruchs 1.

Erfindungsgemäß ist vorgesehen, dass ein solcher elektrischer Kompressormotor für Klimaanlagen oder Wärme- oder Fluidpumpen mit Stator und Rotor, dadurch gekennzeichnet ist, dass Stator und/oder Rotor ein Blechpaket aus gegeneinander elektrisch isolierten Lamellen aus Elektroband oder -blech aufweist, mit einer Dicke des Elektrobandes oder -blechs von mindestens 0,15 mm und maximal 0,50 mm. Das Elektroband oder -blech ist aus einer Stahllegierung mit einer Dichte der Stahllegierung von 7,40 - 7,75 g/cm³.

In einer Ausführung ist das Elektroband oder-blech aus einer Stahllegierung, enthaltend neben Eisen und herstellungsbedingt unvermeidbaren Verunreinigungen folgende Legierungselemente in Gew.-%, wobei die Summe 100 % ergibt:
- Si: 2,30 - 3,40 %
- Al: 0,30 -1,650 %
- Mn: 0,050 - 0,650 %
- C: bis zu 0,010 %,
- N: bis zu 0,010 %,
- S: bis zu 0,0030 %,
- P: bis zu 0,080 %,
wobei optional mindestens eines oder mehrere der Elemente aus der Gruppe Ti, Cr, Nb, Mo, V, Cu, Ni, Sn vorhanden sein kann:
- Ti: bis zu 0,010 %,
- Cr: bis zu 0,150 %,
- Nb, Mo, V: bis zu 0,050 %,
- Cu: bis zu 0,180 %,
- Ni: bis zu 0,150 %,
- Sn: bis zu 0,010 %.

Der elektrische Kompressormotor kann mit oder ohne modulierbarem Frequenzumrichter betrieben werden.

In einer Ausführung enthält die Stahllegierung (oder besteht aus) neben Eisen und herstellungsbedingt unvermeidbaren Verunreinigungen folgende Legierungselemente in Gew.-%, wobei die Summe 100 % ergibt:
- Si: mindestens 2,30 %, insbesondere mindestens 2,40 %, vorzugsweise mindestens 2,50 %, bevorzugt mindestens 2,70 % bis maximal 3,40 %, insbesondere maximal 3,35 %, vorzugsweise maximal 3,30 %, bevorzugt maximal 3,25 %;
- Al: mindestens 0,30 %, insbesondere mindestens 0,50 %, vorzugsweise mindestens 0,60 %, bevorzugt mindestens 0,70 % bis maximal 1,65 %, insbesondere maximal 1,30 %, vorzugsweise maximal 1,10 %, bevorzugt maximal 1,0 %;
- Mn: mindestens 0,050 %, insbesondere mindestens 0,070 %, vorzugsweise mindestens 0,10 %, bevorzugt mindestens 0,110 % bis maximal 0,650 %, insbesondere maximal 0,50 %, vorzugsweise maximal 0,40 %, bevorzugt maximal 0,30 %;
- C: beispielsweise mindestens 0,0003%, insbesondere mindestens 0,0007%, vorzugsweise mindestens 0,0010 %, bevorzugt mindestens 0,0012% bis maximal 0,010 %, insbesondere maximal 0,0080 %, vorzugsweise maximal 0,0060 %, bevorzugt maximal 0,0040 %;
- N: beispielsweise mindestens 0,0003 %, insbesondere mindestens 0,0007 %, vorzugsweise mindestens 0,0009%, bevorzugt mindestens 0,0010 % bis maximal 0,010 %, insbesondere maximal 0,0060 %, vorzugsweise maximal 0,0050 %, bevorzugt maximal 0,0035 %;
- S: beispielsweise mindestens 0,0001%, insbesondere mindestens 0,0002%, vorzugsweise mindestens 0,0004%, bevorzugt mindestens 0,0005 % bis maximal 0,0030 %, insbesondere maximal 0,0025 %, vorzugsweise maximal 0,0020 %, bevorzugt maximal 0,0010 %;
- P: beispielsweise mindestens 0,0003%, insbesondere mindestens 0,0030 %, vorzugsweise mindestens 0,0055 %, bevorzugt mindestens 0,0080 % bis maximal 0,080 %, insbesondere maximal 0,050 %, vorzugsweise maximal 0,030 %, bevorzugt maximal 0,020 %;
wobei optional mindestens eines oder mehrere der Elemente aus der Gruppe Ti, Cr, Nb, Mo, V, Cu, Ni vorhanden sein kann:
- Ti: insbesondere mindestens 0,0005 %, vorzugsweise mindestens 0,0010 %, bevorzugt mindestens 0,0014 % bis maximal 0,010 %, insbesondere maximal 0,0080 %, vorzugsweise maximal 0,0060 %, bevorzugt maximal 0,0045 %;
- Cr: beispielsweise mindestens 0,0010 %, insbesondere mindestens 0,010 %, vorzugsweise mindestens 0,020 % bis maximal 0,150 %, insbesondere maximal 0,080 %, vorzugsweise maximal 0,040 %;
- Nb, Mo, V: insbesondere einzeln oder in Summe mindestens 0,0010 % bis einzeln oder in Summe maximal 0,050 %;
- Cu: beispielsweise 0, insbesondere mindestens 0,0050 % bis maximal 0,180 %, insbesondere maximal 0,120 %, vorzugsweise maximal 0,0650 %;
- Ni: beispielsweise 0, insbesondere mindestens 0,0050 % bis maximal 0,180 %, insbesondere maximal 0,1350 %, vorzugsweise maximal 0,0750 %;
- Sn: beispielsweise 0 bis maximal 0,010 %, insbesondere maximal 0,0050 %, vorzugsweise maximal 0,0020 %;
- Rest Fe und herstellungsbedingt unvermeidbare Verunreinigungen, insbesondere bis zu einer Gesamtmenge von 0,010 %.

Die Legierungselemente C, N, S, P, Ti, Cr, Nb, Mo, V, Cu, Ni, Sn wenn sie nicht gezielt zulegiert oder zugelassen werden, zählen zu der Gruppe der herstellungsbedingt unvermeidbaren Verunreinigungen in der Stahllegierung.

Im Folgenden werden die Begriffe Elektroband und Elektroblech als gleichwertige Synonyme verwendet.

Die Eigenschaften des Elektrobands werden in der Regel nach der sogenannten Schlussglühung und somit vor der Weiterverarbeitung wie zum Beispiel Stanzen und/oder Pakettieren eingestellt. Eine weitere Möglichkeit ist es, nach dem Stanzen und/oder Pakettieren durch eine weitere Glühbehandlung die Eigenschaften einzustellen. Besonders vorteilhaft ist es, das Paketieren nach einem (inline) Klebeverfahren (vgl. DE 10 2015 121 172 A1, DE 10 2019 113 290 A1, DE 10 2019 113 291 A1, DE 10 2020 109 985 A1) und/oder eine Wärmenachbehandlung der Blechpakete, insbesondere wenn ein speziell für die Wärmenachbehandlung ausgerichtetes Elektroband (vgl. DE 10 2018 201 622 A1, DE 10 2018 201 618 A1) eingesetzt wird. Die Einstellung der gewünschten Eigenschaften über Glühbehandlungen ist Stand der Technik und somit bekannt. Beispielsweise wird die Glühbehandlung in dem Fachmann bekannten Ofen bei einer Temperatur von 950 bis 1100 °C für mindestens 10 s und maximal 90 s durchgeführt.

Wird in der Anwendung besonderer Augenmerk auf die akustischen Eigenschaften gelegt, können diese durch den zusätzlichen Einsatz von dämpfenden viskoelastischen Zwischenschichten verbessert werden (vgl. WO 2018/157943 A1).

Als Kompressormotor kommen im Wesentlichen die Motorvariante PMSM (Permanentmagnetsynchronmotor), ASM (Asynchronmotor), RSM (Reluktanzsynchronmotor) und FESM (fremderregte Synchronmotor) in Frage.

In einer Ausführung wird als Elektroblech nicht-kornorientiertes Elektroband, sogenanntes NO-Elektroband, eingesetzt. In einer Alternative wird als Elektroblech kornorientiertes Elektroband, sogenanntes KO-Elektroband, eingesetzt.

In einer Ausführung wird ein Elektroband mit einer Stahllegierung mit einer Dichte bei 20 °C von mindestens 7,40 g/cm³, insbesondere mindestens 7,45 g/cm³, vorzugsweise mindestens 7,50 g/cm³, bevorzugt mindestens 7,55 g/cm³ und höchstens 7,75 g/cm³, insbesondere höchstens 7,70 g/cm³, vorzugsweise höchstens 7,68 g/cm³, bevorzugt höchstens 7,65 g/cm³ eingesetzt. Erfindungsgemäß wird neben der chemischen Zusammensetzung die Dichte zur Charakterisierung der Stahllegierung verwendet, da diese durch Zusammensetzung, Gitterparameter, Korngrößen beeinflusst wird und ihrerseits unmittelbare Auswirkungen auf die Beschaffenheit des Werkstoffs, wie beispielsweise Zugfestigkeit und Bruchzähigkeit hat. Die Dichte kann beispielsweise mit steigenden Gehalten an Aluminium und/oder Silizium abhängig von den oben genannten Maximalwerten reduziert werden, wodurch insbesondere die Masse, respektive in der Nutzung, auch die Rotormasse reduziert und gleichzeitig auch die Festigkeit erhöht werden kann. Die Dichte kann einfach ermittelt werden, indem das vorliegende Elektroblech, beispielsweise als Probe, mit einer endlichen Abmessung vermessen wird in Länge, Breite und die Dicke, um daraus das Volumen zu berechnen, und gewogen wird, um die Masse zu erfassen. Die Dichte ergibt sich somit aus dem Quotienten Masse durch Volumen.

Das Elektroband weist gemäß einer Ausgestaltung eine Dicke von mindestens 0,15 mm, insbesondere mindestens 0,20 mm, vorzugsweise mindestens 0,22 mm, bevorzugt mindestens 0,24 mm und maximal 0,50 mm, maximal 0,48 mm oder maximal 0,45 mm, insbesondere maximal 0,40 mm, vorzugsweise maximal 0,35 mm, bevorzugt maximal 0,33 mm, besonders bevorzugt maximal 0,31 mm auf, beispielsweise jeweils mit einer Abweichung (Dickenschwankung) von bis zu 10 %, insbesondere bis zu 8 %, vorzugsweise bis zu 4 %. Im Rahmen der vorliegenden Erfindung bedeutet "Dicke" die Dicke des (nicht kornorientierten) Elektrobands oder -blechs nach dem Kaltwalzen, d. h. in der Form, in der es auch später in Kompressormotoren eingesetzt wird.

Gemäß einer vorteilhaften Ausgestaltung weist das Elektroband spezifische Ummagnetisierungsverluste bei 1,0 T und 50 Hz im Bereich von < 1,5 W/kg und bei 1,0 T und 200 Hz im Bereich von < 10,0 W/kg, insbesondere < 7,5 W/kg, vorzugsweise < 6,0 W/kg; und/oder bei 1,5 T und 200 Hz im Bereich von < 20,0 W/kg, insbesondere < 18,0 W/kg, vorzugsweise < 14,0 W/kg; und/oder bei 1,0 T und 400 Hz im Bereich von < 25,0 W/kg, insbesondere < 20,0 W/kg, vorzugsweise < 16,0 W/kg; und/oder bei 1,5 T und 400 Hz im Bereich von < 50,0 W/kg, insbesondere < 48,0 W/kg, vorzugsweise < 40,0 W/kg; und/oder bei 1,0 T und 700 Hz im Bereich von < 50,0 W/kg, insbesondere < 47,0 W/kg, vorzugsweise < 45,0 W/kg; und/oder bei 1,5 T und 700 Hz im Bereich von < 125,0 W/kg, insbesondere < 120,0 W/kg, vorzugsweise < 90,0 W/kg; und/oder bei 1,0 T und 1000 Hz im Bereich von < 100,0 W/kg, insbesondere < 85,0 W/kg, vorzugsweise < 65,0 W/kg; und/oder bei 1,5 T und 1000 Hz im Bereich von < 200,0 W/kg, insbesondere < 180,0 W/kg, vorzugsweise < 170,0 W/kg auf. Der Minimalwert ist immer 1,0 W/kg.

Alternativ oder zusätzlich weist das Elektroband gemäß einer vorteilhaften Ausgestaltung eine Polarisation bei 100 A/m von > 0,5 T, insbesondere > 0,7 T, vorzugsweise > 0,8 T; und/oder bei 200 A/m von > 1,0 T, insbesondere > 1,1 T, vorzugsweise > 1,2 T; und/oder bei 2500 A/m von > 1,25 T, insbesondere > 1,4 T, vorzugsweise > 1,5 T; und/oder bei 5000 A/m von > 1,3 T, insbesondere > 1,5 T, vorzugsweise > 1,6 T; und/oder bei 10000 A/m von > 1,4 T, insbesondere > 1,6 T, vorzugsweise > 1,7 T; jeweils bei 50 Hz auf.

In einer Ausführung weist das Elektroband oder -blech bei einer Polarisation P von 1,5 T und 50 Hz Verlustwerte von maximal 2,3 W/kg und/oder bei einer Polarisation P von 1,0 T und 1000 Hz Verlustwerte von maximal 58 W/kg jeweils bei einer (Blech-)Dicke von 0,280 bis 0,310 mm, und bei einer Polarisation P von 1,5 T und 50 Hz Verlustwerte von maximal 2,2 W/kg und/oder bei einer Polarisation P von 1,0 T und 1000 Hz Verlustwerte von maximal 55 W/kg, jeweils bei einer (Blech-)Dicke von 0,255 bis 0,280 mm, auf.

Die Polarisation und die spezifischen Ummagnetisierungsverluste werden nach DIN EN 60404-2:2009-01: Magnetische Werkstoffe - Teil 2: "Verfahren zur Bestimmung der magnetischen Eigenschaften von Elektroband und -blech mit Hilfe eines Epsteinrahmens" bestimmt.

Durch die geringen Eisenverluste in Form der geringen spezifischen Ummagnesierungsverluste wird der elektrische Kompressormotor inkl. weiterer Anbauteile, wie zum Beispiel bei Kupferleitungen und Magnete weniger erwärmt. Geringe Temperaturen bewirken im Vergleich zu höheren Temperaturen eine höhere Remanenz der Magnete und einen niedrigeren Kupferwiderstand. Dies hat wiederum einen positiven Effekt auf den Wirkungsgrad. Außerdem kann der Kühlaufwand aufgrund geringerer Eisenverluste auch geringer ausfallen, so dass damit auch Kosten reduziert werden können.

Gemäß einer Ausgestaltung weist das Elektroband einen mittleren Korndurchmesser von mindestens 50 und maximal 200 µm, insbesondere maximal 170 µm, vorzugsweise maximal 140 µm auf. Der Korndurchmesser wird durch eine Gefügeuntersuchung mittels Lichtmikroskopie nach ASTM El 12"Standard Test Methods for Determining Average Grain Size" bestimmt.

Gemäß einer Ausgestaltung weist das Elektroband einen spezifischen elektrischen Widerstand von mindestens 0,40 µΩm, insbesondere mindestens 0,45 µΩm, vorzugsweise mindestens 0,50 µΩm, bevorzugt mindestens 0,55 µΩm bis maximal 0,70 µΩm, insbesondere maximal 0,68 µΩm, vorzugsweise maximal 0,64 µΩm bei einer Temperatur von 50 °C auf.

Verfahren zur Bestimmung des spezifischen elektrischen Widerstands sind dem Fachmann an sich bekannt, beispielsweise anhand einer Vierpunktmessung nach DIN EN 60404-13:2008-05 "Magnetische Werkstoffe - Teil 13: Prüfung zur Messung der Dichte, des spezifischen Widerstandes und des Stapelfaktors von Elektroblech und -band".

Gemäß einer Ausgestaltung weist das Elektroband eine Streckgrenze R_{p0,2} von 200 bis 500 N/mm² auf.

Gemäß einer Ausgestaltung weist das Elektroband eine Zugfestigkeit Rₘ von mindestens 300 N/mm², insbesondere mindestens 350 N/mm², vorzugsweise mindestens 420 N/mm² bis maximal 600 N/mm², insbesondere maximal 540 N/mm², vorzugsweise maximal 510 N/mm² auf.

Gemäß einer Ausgestaltung weist das Elektroband eine Bruchdehnung A_{L=80} von mindestens 5 %, insbesondere mindestens 10 %, vorzugsweise mindestens 13 % bis maximal 30 %, insbesondere maximal 26 %, vorzugsweise maximal 23 % auf.

Die vorgenannten Parameter, Streckgrenze, Zugfestigkeit, Bruchdehnung werden nach dem Fachmann bekannten Verfahren, beispielsweise Zugversuch nach DIN EN ISO 6892-1:2017-02 "Metallische Werkstoffe - Zugversuche - Teil 1: Prüfverfahren bei Raumtemperatur", ermittelt jeweils in Walzrichtung, bestimmt.

Gemäß einer Ausgestaltung weist das Elektroband eine Härte Hᵥ₅ von 140 bis 240 HV auf. Der Wert Hᵥ₅ beschreibt die Härte und wird nach DIN EN ISO 6507-1:2006-03"Metallische-Werkstoffe - Härteprüfung nach Vickers - Teil 1: Prüfverfahren" bestimmt.

Gemäß einer vorteilhaften Ausgestaltung besteht die elektrische Isolation aus einer jeweils zwischen den Lamellen angeordneten Isolationsschicht mit einer Schichtdicke im Bereich von mindestens 0,25 µm, insbesondere mindestens 0,30 µm, vorzugsweise mindestens 0,50 µm, bevorzugt mindestens 1,0 µmm bis maximal 5,0 µm, insbesondere maximal 4,0 µm, vorzugsweise maximal 2,5 µm, bevorzugt maximal 2,0 µm.

Gemäß einer zweiten Lehre betrifft die Erfindung einen Kompressor, welcher einen erfindungsgemäßen elektrischen Kompressormotor und einen durch den Kompressormotor anzutreibenden Kompressionsmechanismus umfasst.

Der in Rede stehende Kompressor einer Klimaanlage saugt gasförmiges Kältemittel von einem Verdampfer an, wodurch ein Druckabfall im Verdampfer bewirkt wird. Durch den generierten Druckabfall verdampft das Kältemittel zu Kältemitteldampf bei niedrigen Temperaturen. Der Kältemitteldampf wird dadurch vom Klimakompressor verdichtet. Der infolge der Verdichtung erwärmte Kältemitteldampf wird über Leitungen zu einem Kondensator geführt. Dort wird der Kältemitteldampf unter Abgabe der Wärme wieder verflüssigt. Anschließend wird das flüssige Kältemittel dem zum kühlenden Bereich wieder zugeführt. Nun kann der Vorgang wiederholt werden.

Gemäß einer Ausgestaltung umfasst der Kompressor Lamellen aus Elektroband, welche nachgeglüht wurden, bevorzugt durch Einsatz eines nachglühfähigen Elektrobandes und/oder indem die Blechpakete rein über Klebeverbindungen hergestellt wurden.

Gemäß einer dritten Lehre betrifft die Erfindung eine Klimaanlage umfassend einen Kompressor gemäß der zweiten Lehre.

Der in Rede stehende Kompressor findet gemäß einer alternativen Ausführung in einer Wärmepumpe Anwendung. Im einfachsten Fall wird beispielsweise Luft als Energiequelle verwendet. (Außen-)Luft wird mithilfe von Ventilatoren angesaugt und überträgt sie an einen Wärmeübertrager, welcher der Luft Wärme entzieht und sie an ein zirkulierendes flüssiges Medium, beispielsweise ein flüssiges Kältemittel, weitergibt, wobei dieses bereits bei niedrigen Temperaturen seinen Aggregatzustand ändert und dadurch verdampft wird. Es folgt der Verdichtungsprozess, in dem ein mit Strom angetriebener Kompressor den Druck des Kältemitteldampfes erhöht. Mit der Druckerhöhung steigt auch die Temperatur des Kältemitteldampfs, so dass die infolge der Verdichtung erzeugte Wärme über einen (weiteren) Wärmeübertrager an einen Heizkreis weitergegeben wird. Der Kältemitteldampf kühlt dabei allmählich ab und verflüssigt sich wieder. In einem Expansionsventil wird der Druck abgebaut, bis der Dampf wieder flüssig wird. Nun kann der Vorgang wiederholt werden. Nach demselben Prinzip läuft auch die Wärmepumpe bei der Abluftwärmepumpe. Der wesentliche Unterschied liegt darin, dass nicht der Außenluft, sondern der Abluft Wärme entzogen wird. Dieses Funktionsprinzip wird auch gebräuchlich als Luft-Wasser-Wärmepumpe bezeichnet.

Alternativ gibt es sogenannte Wasser-Wasser-Wärmepumpen, die vom Prinzip her fast identisch zu den Luft-Wasser-Wärmepumpen sind, lediglich mit dem Unterschied, dass nicht (Außen-) bzw. (Ab-)Luft als Energiequelle, sondern die Wasser-Wasser-Wärmepumpe ihre Wärme aus dem Grundwasser gewinnt. Das Grundwasser bietet das ganze Jahr über eine konstante Temperatur von 7 bis 12 °C. Neben Grundwasser besteht aber auch die Möglichkeit, Kühlwasser, etwa aus industrieller Abwärme, als primäre Energiequelle zu nutzen.

Eine weitere Alternative sind sogenannte Sole-Wasser-Wärmepumpen. Auch hier ist das Prinzip der Wasser-Wasser-Wärmepumpe sehr ähnlich. Die Energiequelle ist auch hier kostenlos und das ganze Jahr über sehr konstant. Die Temperaturen liegen je nach Tiefe und Bodenqualität zwischen 7 bis 12 °C, insbesondere auch dann, wenn die obere Erdschicht zugefroren ist. Hier wird die aus der Erdschicht gewonnene Wärme ebenfalls durch einen Kreislauf mit Kältemittel geleitet, um die Wärme entsprechend zu nutzen.

Gemäß einer vierten Lehre betrifft die Erfindung eine Wärmepumpe umfassend einen Kompressor gemäß der zweiten Lehre.

Gemäß einer fünften Lehre betrifft die Erfindung eine Fluidpumpe umfassend einen Kompressor gemäß der zweiten Lehre.

Die Nutzungsart aller Wärme- und Fluidpumpenprinzipien sind dem Fachmann bekannt.

Gemäß einer sechsten Lehre betrifft die Erfindung Verwendung einer Stahllegierung mit einer Dichte von 7,40 - 7,75 g/cm³ enthaltend neben Eisen und herstellungsbedingt unvermeidbaren Verunreinigungen folgende Legierungselemente in Gew.-%, wobei die Summe 100 % ergibt:
- Si: 2,30 - 3,40 %
- Al: 0,30 -1,650 %
- Mn: 0,050 - 0,650 %
- C: bis zu 0,010 %,
- N: bis zu 0,010 %,
- S: bis zu 0,0030 %,
- P: bis zu 0,080 %,
wobei optional mindestens eines oder mehrere der Elemente aus der Gruppe Ti, Cr, Nb, Mo, V, Cu, Ni, Sn vorhanden sein kann:
- Ti: bis zu 0,010 %,
- Cr: bis zu 0,150 %,
- Nb, Mo, V: bis zu 0,050 %,
- Cu: bis zu 0,180 %,
- Ni: bis zu 0,150 %,
- Sn: bis zu 0,010 %,
in einem Stator und/oder Rotor eines elektrischen Kompressormotors für Klimaanlagen oder Wärme- oder Fluidpumpen.

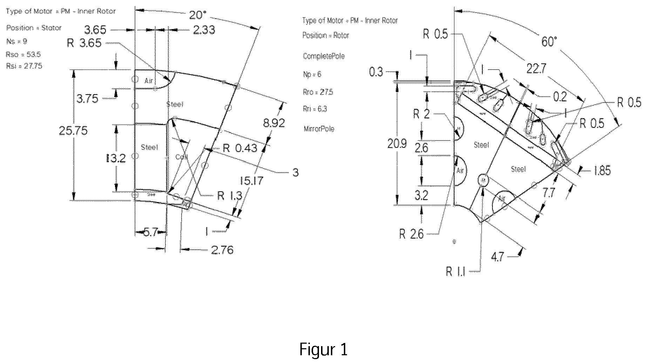

In einer elektromagnetischen Simulation, beispielsweise mittels smartFEM, wurden die Struktur/Kontur der zu stanzenden und paketierenden Elektrobleche mit jeweils gegeneinander isolierenden Isolierschichten ausgelegt, s. Teilschnitte in **Figur 1** für den Stator (links) und für den Rotor (rechts). Sowohl Stator wie auch Rotor umfassten jeweils 128 Lamellen, so dass ein am Beispiel einer PMSM für Klimakompressoren, ebenfalls denkbar für Wärmepumpenkompressoren, ein elektrischer Kompressormotor mit einer Motorleistung von 3,5 kW, einer Frequenz von 200 Hz, einer Eisenlänge von 45,2 mm und einem Nennbetriebspunkt (2,72A, -20° Phasenwinkel, 3600 rpm) ausgelegt wurde.

Das verwendete Elektroblech mit einer Dicke von 0,35 mm hatte eine Zusammensetzung bestehend aus Si: 2,7 Gew.-%, Al: 0,78 Gew.-%, Mn: 0,22 Gew.-% und unvermeidbaren Verunreinigungen, wobei die Verunreinigungen C, N, P und S enthielten und in Summe einen Gehalt von kleiner 0,010 Gew.-% aufwiesen. Die Dichte betrug 7,61 g/cm³. Die spezifischen Ummagnetisierungsverluste lagen bei 0,96 W/kg in Bezug auf 1,0 T und 50 Hz; bei 6,18 W/kg in Bezug auf 1,0 T und 200 Hz und bei 17,40 W/kg in Bezug auf 1,0 T und 400 Hz. Die Polarisation betrug bei 2.500 A/m 1,54 T, bei 5.000 A/m 1,65 T und bei 10.000 A/m 1,78 T.

Der spezifische elektrische Widerstand bei einer Temperatur von 50 °C betrug 0,536 µΩm. Weitere Parameter wurden bestimmt: Streckgrenze R_{p0,2} von 365 N/mm², Zugfestigkeit Rₘ von 492 N/mm², Bruchdehnung A_{L=80} von 18 % und Härte Hᵥ₅ von 174 HV.

Die Dicke der Isolierschicht war zwischen allen Lamellen identisch mit 1,05 µm.

Alle Parameter wurden mit den oben genannten Verfahren ermittelt.

Der Wirkungsgrad und die Eisenverluste im Nennbetriebspunkt wurden mit einem Wirkungsgrad von 96,14 % und Eisenverlusten von 20,6 W für die erfindungsgemäße Ausführung bestimmt. Im Vergleich dazu zeigte die Standardgüte mit einer Dicke von mit 0,5 mm einen geringeren Wirkungsgrad mit 92,16 % und einen höheren Eisenverlust mit 50,8 W im Nennbetriebspunkt.

## Patentansprüche

1. Elektrischer Kompressormotor für Klimaanlagen oder Wärme- oder Fluidpumpen mit Stator und Rotor, **dadurch gekennzeichnet, dass** Stator und/oder Rotor ein Blechpaket aus gegeneinander elektrisch isolierten Lamellen aus Elektroband oder -blech aus einer Stahllegierung aufweist, mit einer Dicke des Elektrobandes oder -blechs von mindestens 0,15 mm und maximal 0,50 mm und mit einer Dichte der Stahllegierung von 7,40 - 7,75 g/cm³.

2. Elektrischer Kompressormotor nach Anspruch 1, wobei das Elektroband oder -blech aus einer Stahllegierung ist, enthaltend neben Eisen und herstellungsbedingt unvermeidbaren Verunreinigungen folgende Legierungselemente in Gew.-%, wobei die Summe 100 % ergibt:
- Si: 2,30 - 3,40 %
- Al: 0,30 -1,650 %
- Mn: 0,050 - 0,650 %
- C: bis zu 0,010 %,
- N: bis zu 0,010 %,
- S: bis zu 0,0030 %,
- P: bis zu 0,080 %,
wobei optional mindestens eines oder mehrere der Elemente aus der Gruppe Ti, Cr, Nb, Mo, V, Cu, Ni, Sn vorhanden sein kann:
- Ti: bis zu 0,010 %,
- Cr: bis zu 0,150 %,
- Nb, Mo, V: bis zu 0,050 %,
- Cu: bis zu 0,180 %,
- Ni: bis zu 0,150 %,
- Sn: bis zu 0,010 %.

3. Elektrischer Kompressormotor nach einem der vorangehenden Ansprüche, wobei das Elektroband spezifische Ummagnetisierungsverluste bei 1,0 T und 50Hz von <1,5 W/kg und/oder bei 1,0 T und 200 Hz im Bereich von < 10,0 W/kg und/oder bei 1,5 T und 200 Hz im Bereich von < 20,0 W/kg und/oder bei 1,5 T und 400 Hz im Bereich von < 50,0 W/kg und/oder bei 1,0 T und 700 Hz im Bereich von < 50,0 W/kg und/oder bei 1,5 T und 700 Hz im Bereich von < 125,0 W/kg und/oder bei 1,0 T und 1000 Hz im Bereich von < 100,0 W/kg und/oder bei 1,5 T und 1000 Hz im Bereich von < 200,0 W/kg aufweist.

4. Elektrischer Kompressormotor nach einem der vorangehenden Ansprüche, wobei das Elektroband eine Polarisation bei 100 A/m von > 0,5 T und/oder bei 200 A/m von > 1,0 T und/oder bei 2.500 A/m von >1,25 T und/oder bei 5.000 A/m von >1,3 T und/oder bei 10.000 A/m von >1,4 T bei jeweils bei 50 Hz aufweist.

5. Elektrischer Kompressormotor nach einem der vorangehenden Ansprüche, wobei das Elektroband einen mittleren Korndurchmesser von mindestens 50 und maximal 200 µm aufweist.

6. Elektrischer Kompressormotor nach einem der vorangehenden Ansprüche, wobei das Elektroband einen spezifischen elektrischen Widerstand von 0,40 bis 0,70 µΩm bei einer Temperatur von 50 °C aufweist.

7. Elektrischer Kompressormotor nach einem der vorangehenden Ansprüche, wobei das Elektroband eine Streckgrenze R_{p0,2} von 200 bis 500 N/mm² aufweist.

8. Elektrischer Kompressormotor nach einem der vorangehenden Ansprüche, wobei das Elektroband eine Zugfestigkeit Rₘ von 300 bis 600 N/mm² aufweist.

9. Elektrischer Kompressormotor nach einem der vorangehenden Ansprüche, wobei das Elektroband eine Bruchdehnung A_{L=80} von 5 bis 30 % aufweist.

10. Elektrischer Kompressormotor nach einem der vorangehenden Ansprüche, wobei das Elektroband eine Härte Hᵥ₅ von 140 bis 240 HV aufweist.

11. Elektrischer Kompressormotor nach einem der vorangehenden Ansprüche, wobei die elektrische Isolation aus einer jeweils zwischen den Lamellen angeordneten Isolationsschicht mit einer Schichtdicke im Bereich von 0,25 bis 5,0 µm besteht.

12. Kompressor, umfassend den elektrischen Kompressormotor nach einem der vorangehenden Ansprüche und einen durch den Kompressormotor anzutreibenden Kompressionsmechanismus.

13. Klimaanlage umfassend den Kompressor nach Anspruch 12.

14. Wärmepumpe umfassend den Kompressor nach Anspruch 12.

15. Fluidpumpe umfassend den Kompressor nach Anspruch 12.

16. Verwendung einer Stahllegierung mit einer Dichte von 7,40 - 7,75 g/cm³ enthaltend neben Eisen und herstellungsbedingt unvermeidbaren Verunreinigungen folgende Legierungselemente in Gew.-%, wobei die Summe 100 % ergibt:
- Si: 2,30 - 3,40 %
- Al: 0,30 -1,650 %
- Mn: 0,050 - 0,650 %
- C: bis zu 0,010 %,
- N: bis zu 0,010 %,
- S: bis zu 0,0030 %,
- P: bis zu 0,080 %,
wobei optional mindestens eines oder mehrere der Elemente aus der Gruppe Ti, Cr, Nb, Mo, V, Cu, Ni, Sn vorhanden sein kann:
- Ti: bis zu 0,010 %,
- Cr: bis zu 0,150 %,
- Nb, Mo, V: bis zu 0,050 %,
- Cu: bis zu 0,180 %,
- Ni: bis zu 0,150 %,
- Sn: bis zu 0,010 %,
in einem Stator und/oder Rotor eines elektrischen Kompressormotors für Klimaanlagen oder Wärme- oder Fluidpumpen.
